# EUROPEAN PATENT SPECIFICATION

(11) **EP 2 994 978 B1**
(45) Date of publication and mention of the grant of the patent: **12.10.2022**
(21) Application number: 14723999.0
(22) Date of filing: 01.05.2014
(51) Int. Cl.: H02K 15/02, H02K 1/04, H02K 1/24

(54) **METHOD FOR MANUFACTURING A MULTI-MATERIAL ROTOR AND/OR STATOR FOR ELECTRICAL MACHINES**
HERSTELLUNGSVERFAHREN EINES MEHRFACHMATERIAL-ROTORS UND/ODER -STATORS FÜR ELEKTRISCHE MASCHINEN
PROCEDE DE FABRICATION D'UN ROTOR ET/OU STATOR A MATERIAUX MULTIPLES POUR MACHINES ELECTRIQUES

(30) Priority: 06.05.2013 EP 13002413
(43) Date of publication of application: 16.03.2016
(73) Proprietor: Tata Steel UK Ltd., London SW1X 7HS (GB)
(72) Inventor: CORKERY, Denis, NL-1951 JZ Velsen-Noord (NL); WOODCOCK, Mike, NL-1951 JZ Velsen-Nood (NL)
(74) Representative: Wynne-Jones IP Limited
(86) International application number: PCT/EP2014/001170
(87) International publication number: WO 2014/180546

(56) References cited:
- DE-U1-202009 009 304
- GB-A- 2 423 421
- JP-A- S61 154 453
- US-A- 4 198 743
- US-A- 4 918 831
- LIPO T A ED - ZAJC B ET AL: "Novel reluctance machine concepts for variable speed drives", ELECTROTECHNICAL CONFERENCE, 1991. PROCEEDINGS., 6TH MEDITERRANEAN LJUBLJANA, SLOVENIA 22-24 MAY 1991, NEW YORK, NY, USA,IEEE, US, 22 May 1991 (1991-05-22), pages 34-43, XP010039987, DOI: 10.1109/MELCON.1991.161773 ISBN: 978-0-87942-655-2

## Description

### Field of the invention

The invention relates to a method for manufacturing a rotor or a stator, comprising rotor and stator poles, for electric motors such as reluctance motors and generators, but can also be applied to other synchronous machines.

### Background of the invention

An electric motor, for instance a switched reluctance motor, has a stator with a number of stator poles with each pole having an electric coil. A rotor is provided with a number of rotor poles of a magnetic material, such as a soft magnetic material, embedded in a rotor body of a magnetic or non magnetic material. By energizing the coils of the stator poles a torque is generated by means of which the rotor poles align with the energized stator poles. By energizing the stator poles in a specific sequence, the rotation of the rotor is maintained.

In a specific type of switched reluctance motors, known as segmental rotor switched reluctance motors, the magnetic flux only flows through each individual rotor tooth or pole. In this case, the non-magnetic material of the rotor serves to keep the rotor poles of magnetic material isolated from each other, to provide structural strength to the rotor and to hold the rotor poles in place.

To keep the rotor poles of a magnetic material secured in the rotor body, recesses are provided in the rotor body such that a complementary shaped rotor pole of magnetic material can only be brought into such recess in a direction parallel to the rotation axis of the rotor. These recesses have for instance a key hole shape or a fir tree shape. With such recesses and complementary shaped rotor poles, the rotor poles are fixed in the radial direction.

With such a construction the rotor poles are kept firmly in place. However, in order to do so the magnetic material of a rotor pole will extend quite a distance in the radial direction into the core of the rotor which will result in a distribution of the magnetic flux well into the core of the rotor giving rise to a reduction in torque performance. This reduction can be substantial and will result in a reluctance motor with reduced operating efficiency.

The stator for in principle any type of electric machine can be made with different materials in the stator teeth and the body ('back iron') of the stator in order to improve performance or reduce the use of expensive material. However both the material in the teeth and the one in the stator body will be magnetic. In this case the stator is of a similar construction to the rotor, that is, a stator body with a number of stator poles wherein the stator poles are secured in the stator body by providing recesses in the stator body complementary to the shape of at least part of a stator pole. Also the stator poles extending into the stator body may give rise to eddy current or magnetic flux losses.

In order to control eddy current losses the rotor and stator body consists of a stack of multiple thin sheet laminates, each laminate having an electrically insulating coating on both sides. For a generator the same principles apply as described above for an electric motor GB 2 423 421 A discloses a method for manufacturing a rotor or stator according to the preamble of claim 1.

### Objectives of the invention

It is an objective of the present invention to provide method for manufacturing a rotor and/or a stator for an electric motor or generator which provides improved machine performance, lower costs or ease of manufacturing.

It is another objective of the present invention to provide method for manufacturing a rotor and/or stator for an electric motor or generator which provide improved torque performance and/or energy efficiency.

### Description of the invention

The invention is defined by a method for manufacturing a rotor or stator according to claim 1. Further aspects of the invention are defined by the dependent claims.

Preferably the rotor and/or stator body laminates have a circular geometry since that makes the manufacturing easier and offers a more cost effective approach as opposed to a non-circular geometry. This also applies to the manufacturing of the annular pole laminates. The cutting of rotor and/or stator body laminates and the respective annular pole laminates from sheet material can be carried out by means of laser cutting, water jet cutting, electrical discharge machining or stamping. For volume production, stamping is the method of choice.

Joining a circular rotor and/or stator body laminate with a circular annular pole laminate is easier because of the simple circular path to follow for joining these laminates. However in the case the favourable direction of the electrical steel, e.g. a grain oriented steel should be utilised in the poles, many pole laminates (one for each pole) can be welded into one stator or rotor laminate. Preferably the rotor and/or stator body laminates and the respective annular pole laminates are joined by means of electron beam welding or laser welding.

The rotor and/or stator body laminates joined with the respective annular laminates are stacked. The operation of cutting or machining the combined rotor or stator body and annular pole laminates into the desired geometric profile can be executed separately for each of the laminates before stacking the laminate to form an assembly of rotor or stator body and poles or it can be carried out after stacking of the multi-material laminates. Depending on the desired geometric rotor or stator profile the cutting or machining could comprise the removal of part of the rotor or stator body laminates.

Before joining the rotor or stator body laminates and the respective annular pole laminates the rotor and/or stator body laminates are provided with an electrically insulating coating. It is also possible to apply the coating after joining the laminates although it is easier to apply the coating before joining the laminates. However, if the electrically insulating coating cannot withstand the raise in temperature resulting from the welding operation, the electrically insulating coating should be applied after joining the laminates. Since the electrically insulating coating should only be applied to the rotor and/or stator body laminates this would require additional measures for an accurate application of the coating.

The welding of the rotor or stator body laminates and the annular pole laminates could result in the accumulation of residual stresses and in order to relieve these residual stresses it is further provided that the rotor and/or stator body laminates joined with the annular pole laminates are submitted to an annealing process. If the temperature of the annealing step is too high for the electrically insulating coating, then the electrically insulating coating should be applied after the annealing step.

### Brief description of the drawings

The invention will be further explained on hand of the example shown in the drawing, in which:
- fig. 1: shows schematically a rotor body laminate of a non magnetic material
- fig.2: shows schematically an annular laminate of a magnetic material,,
- fig.3: shows schematically a rotor body laminate joined to an annular lamina, and
- fig.4: shows schematically the joined laminates according to fig. 3 wherein the annular laminate is machined.

### Detailed description of the drawings

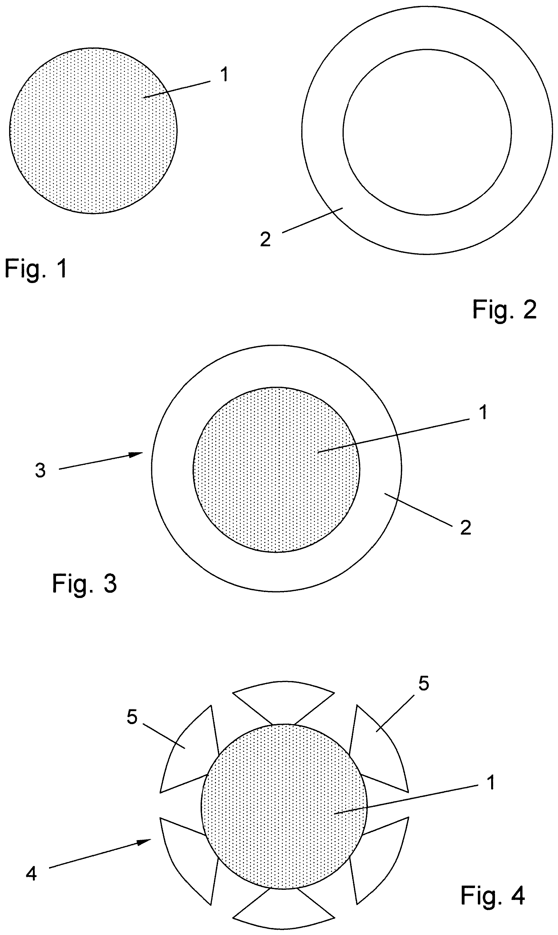

In fig. 1 and 2 show separately a rotor body laminate 1 of a non magnetic material and an annular laminate 2 of a magnetic material. These laminates 1, 2 are cut from sheet material with a thickness in the range of 0.1 - 1.0 mm. Because of the number of laminates required for a rotor this is preferably carried out by punching the laminates out of sheet material. The laminate of a non magnetic material 1 could also be made from another metal than steel, for example from aluminium.

Fig. 3 shows a rotor body laminate 1 joined with an annular laminate 2 forming a semi-finished element 3 for a finished rotor laminate 4, see fig. 4. The laminates 1 and 2 are seam welded along the circumference of the laminates, for instance by laser welding or electron beam welding to be assured to obtain a reliable weld. Instead of welding along the complete circumference it is sufficient to only weld those parts along the circumference that will form the joint between the rotor body laminate and the final rotor pole elements 5.

Fig. 4 shows a finished rotor laminate 4 with the joined laminate 1 and 2 and wherein the annular laminate 3 has been machined such that separate pole elements 5 are obtained. A rotor is assembled by stacking a number of these rotor laminates in a manner known in the art.

For a stator the construction will be similar to a large extent be it that the stator body will roughly have an annular shape with a circular inner wall with the poles at the inner side of the stator body.

## Claims

1. Method for manufacturing a rotor or stator for an electric motor or generator, the rotor comprising a rotor body of a non magnetic material and rotor poles of an electrical steel, the stator comprising a stator body and stator poles of an electrical steel, **characterized in that** the method comprises the steps of:
- providing rotor or stator body laminates with a circumference of one or more straight or curved lines,
- providing annular rotor pole laminates with an edge complementary to the outer circumference of the rotor body laminates or annular stator pole laminates with an edge complementary to the inner circumference of the stator body laminates, **characterised by**
- joining the rotor/stator annular pole laminates separately with the respective rotor/stator body laminates, and
- cutting or machining the annular pole laminates into separate pole elements by cutting or machining the laminates separately, or
- stacking the rotor and stator body laminates joined with the respective annular pole laminates or pole elements followed by cutting or machining the annular pole laminates into separate pole elements.

2. Method according to claim 1, wherein the rotor and stator body laminates and the respective annular pole laminates are joined by means of electron beam welding or laser welding.

3. Method according to claim 1 or 2, wherein the rotor body laminates of a non-magnetic material are provided with an electrically insulating coating.

4. Method according to one or more of claims 1-3, wherein the body laminates joined with the annular pole laminates are submitted to an annealing process.

5. Method according to one or more of claims 1-4, wherein the rotor and stator body laminates and the respective annular pole laminates are cut from sheet material by means of stamping.

## Patentansprüche

1. Verfahren zum Herstellen eines Rotors oder eines Stators für einen Elektromotor oder -generator, der Rotor umfassend einen Rotorkörper aus einem nichtmagnetischen Material und Rotorpole aus einem elektrischen Stahl, der Stator umfassend einen Statorkörper und Statorpole aus einem elektrischen Stahl, **dadurch gekennzeichnet, dass** das Verfahren die Schritte umfasst:
- Versehen von Rotor- oder Statorkörperlaminaten mit einem Umfang einer oder mehrerer gerader oder gekrümmter Linien,
- Versehen von ringförmigen Rotorpollaminaten mit einer zu dem Außenumfang der Rotorkörperlaminate komplementären Kante oder ringförmigen Statorpollaminaten mit einer zu dem Innenumfang der Statorkörperlaminate komplementären Kante, **gekennzeichnet durch**
- separates Verbinden der ringförmigen Rotor-/Statorpollaminate mit den jeweiligen Rotor-/Statorkörperlaminaten, und
- Schneiden oder Zerspanen der ringförmigen Pollaminate in separate Polelemente durch separates Schneiden oder Zerspanen der Laminate, oder
- Stapeln der mit den jeweiligen ringförmigen Pollaminaten oder Polelementen verbundenen Rotor- und Statorkörperlaminate, gefolgt durch Schneiden oder Zerspanen der ringförmigen Pollaminate in separate Polelemente.

2. Verfahren nach Anspruch 1, wobei die Rotor- und Statorkörperlaminate und die jeweiligen ringförmigen Pollaminate mittels Elektronenstrahlschweißen oder Laserschweißen verbunden werden.

3. Verfahren nach Anspruch 1 oder 2, wobei die Rotorkörperlaminate aus einem nichtmagnetischen Material mit einer elektrisch isolierenden Beschichtung versehen werden.

4. Verfahren nach einem oder mehreren der Ansprüche 1 bis 3, wobei die mit den ringförmigen Pollaminaten verbundenen Körperlaminate einem Glühprozess ausgesetzt werden.

5. Verfahren nach einem oder mehreren der Ansprüche 1 bis 4, wobei die Rotor- und Statorkörperlaminate und die jeweiligen ringförmigen Pollaminate aus Blattmaterial mittels Stanzen geschnitten werden.

## Revendications

1. Procédé de fabrication d'un rotor ou stator pour un moteur électrique ou un générateur, le rotor comprenant un corps de rotor en un matériau non magnétique et des pôles de rotor en acier électrique, le stator comprenant un corps de stator et des pôles de stator en acier électrique, **caractérisé en ce que** le procédé comprend les étapes suivantes :
- la fourniture des stratifiés de corps de rotor ou de stator avec une circonférence d'une ou plusieurs lignes droites ou courbes,
- la fourniture des stratifiés de pôle de rotor annulaires avec un bord complémentaire à la circonférence extérieure des stratifiés de corps de rotor ou des stratifiés de pôle de stator annulaires avec un bord complémentaire à la circonférence intérieure des stratifiés de corps de stator, **caractérisé par**
- la jonction des stratifiés de pôle annulaires de rotor/stator séparément aux stratifiés respectifs de corps de rotor/stator, et
- la découpe ou l'usinage des stratifiés polaires annulaires en éléments polaires séparés en découpant ou en usinant les stratifiés séparément, ou
- l'empilement des stratifiés de corps de rotor et de stator joints aux stratifiés de pôles annulaires respectifs ou d'éléments polaires suivi de la découpe ou de l'usinage des stratifiés de pôles annulaires en éléments polaires séparés.

2. Procédé selon la revendication 1, dans lequel les stratifiés de corps de rotor et de stator et les stratifiés de pôles annulaires respectifs sont joints au moyen d'un soudage par faisceau d'électrons ou d'un soudage au laser.

3. Procédé selon la revendication 1 ou 2, dans lequel les stratifiés de corps de rotor en un matériau non magnétique sont fournis d'un revêtement électriquement isolant.

4. Procédé selon une ou plusieurs des revendications 1 à 3, dans lequel les stratifiés de corps joints aux stratifiés de pôles annulaires sont soumis à un processus de recuit.

5. Procédé selon une ou plusieurs des revendications 1 à 4, dans lequel les stratifiés de corps de rotor et de stator et les stratifiés de pôles annulaires respectifs sont découpés dans un matériau en feuille au moyen de l'estampage.
